# EUROPÄISCHE PATENTSCHRIFT

(11) **EP 2 855 172 B1**
(45) Veröffentlichungstag und Bekanntmachung des Hinweises auf die Patenterteilung: **29.03.2017**
(21) Anmeldenummer: 13722463.0
(22) Anmeldetag: 15.05.2013
(51) Int. Cl.: B60C 11/03, B60C 11/04, B60C 11/12

(54) **FAHRZEUGLUFTREIFEN**
PNEUMATIC TIRE
PNEUMATIQUE

(30) Priorität: 01.06.2012 DE 102012104799
(43) Veröffentlichungstag der Anmeldung: 08.04.2015
(73) Patentinhaber: Continental Reifen Deutschland GmbH, 30165 Hannover (DE)
(72) Erfinder: GONCALVES ANKIEWICZ, Amélia Olga, 30559 Hannover (DE); HOFFMANN, Jens, 40670 Meerbusch (DE)
(74) Vertreter: Preusser, Andrea
(86) Internationale Anmeldenummer: PCT/EP2013/060010
(87) Internationale Veröffentlichungsnummer: WO 2013/178464

(56) Entgegenhaltungen:
- EP-A1- 2 039 534
- WO-A1-2012/043668
- US-A1- 2009 038 723

## Beschreibung

Die Erfindung betrifft einen Fahrzeugluftreifen für Nutzfahrzeuge mit einem Laufstreifen mit einer Anzahl von in Umfangsrichtung umlaufenden Umfangsrillen, welche den Laufstreifen in zumindest zwei mittlere Profilrippen und zwei schulterseitige Profilrippen gliedern, wobei in den mittleren Profilrippen jeweils eine Anzahl von in jeder Profilrippe parallel verlaufenden und sich im Wesentlichen in axialer Richtung erstreckenden, in die Umfangsrillen mündenden Einschnitten angeordnet ist.

Ein Fahrzeugluftreifen mit einem derart ausgeführten Laufstreifen ist beispielsweise aus der US 2009/0038723 A1 bekannt. Der Laufstreifen weist fünf in Umfangsrichtung umlaufende Umfangsrillen, vier mittlere Profilrippen sowie zwei schulterseitig verlaufende Profilrippen auf. Die mittleren Profilrippen sind mit Einschnitten versehen, die sich aus auf spezielle Weise orientierten Einschnittabschnitten zusammensetzen, sodass Abstützeffekte eintreten, die die Profilrippen stabilisieren, um derart einem unregelmäßigen Abrieb des Laufstreifens entgegenzuwirken.

Aus der WO2012/043668 A1 ist ein Nutzfahrzeugreifen mit einem Profilrippen aufweisenden Laufstreifen bekannt, welcher im Bereich seiner mittleren Profilrippe mit einer Vielzahl an Einschnitten und Rillen geringer Tiefe versehen ist, wobei diese Einschnitte und Rillen in die die Profilrippe begrenzenden Umfangsrillen einmünden. Die Breite der die mittlere Profilrippe begrenzenden Umfangsrillen beträgt 7,0 mm bis 16,0 mm. Ein weiterer Fahrzeugluftreifen dessen Laufstreifen Profilrippen mit Einschnitten aufweist, ist aus der EP 2 039 534 A1 bekannt.

Laufstreifen von Nutzfahrzeugreifen, die für Antriebsachsen vorgesehen sind, weisen üblicherweise einen geringen Negativanteil von 15 % bis 20 % auf. Ein geringer Negativanteil erschwert es, den Rollwiderstand zu senken.

Der Erfindung liegt somit die Aufgabe zugrunde, den Laufstreifen eines Nutzfahrzeugreifens, insbesondere eines für Antriebsachsen geeigneten Reifens, der eingangs genannten Art derart zu gestalten, dass der Rollwiderstand reduziert wird, wobei weitere Eigenschaften des Reifens bzw. des Laufstreifens, wie der Nassgriff, das Traktions- und Bremsverhalten, die Abriebseigenschaften und die Lebensdauer, auf einem hohen Niveau erhalten bleiben sollen.

Gelöst wird die gestellte Aufgabe erfindungsgemäß dadurch, dass die Einschnitte in den mittleren Profilrippen von Profilrippe zu Profilrippe jeweils um einen Abstand von 5 mm bis 7 mm in Umfangsrichtung gegeneinander versetzt sind, und dass die die mittleren Profilrippen voneinander trennende(n) Umfangsrille(n) im Wesentlichen gerade verläuft bzw. verlaufen und an der Laufstreifenperipherie im Neuzustand des Reifens eine Breite zwischen 3 mm und 4 mm aufweist bzw. aufweisen.

Es hat sich herausgestellt, dass durch diesen gegenseitigen Versatz der Einschnitte in den mittleren Profilrippen und die schmale(n) Umfangsrille(n) zwischen den mittleren Profilrippen der Rollwiderstand reduziert werden kann, wobei die weiteren Laufstreifeneigenschaften auf gutem bzw. hohem Niveau erhalten bleiben. Der Versatz der Einschnitte um 5 mm bis 7 mm hat ein zeitversetztes Eintreten der Einschnitte beim Abrollen des Reifens in den Untergrund zur Folge, welches die Verformbarkeit des Laufstreifens reduziert. Dies ist vor allem darauf zurückzuführen, dass ein simultanes Öffnen von Einschnitten in den Profilrippen verhindert wird. Eine höhere Verformbarkeit würde über die Hysterese des Laufstreifenmaterials einen höheren Rollwiderstand zur Folge haben. Die relativ schmalen Umfangsrillen zwischen den mittleren Profilrippen reduzieren ebenfalls die Verformbarkeit des Laufstreifens.

Sind drei oder mehr mittlere Profilrippen im Laufstreifen des Fahrzeugluftreifens vorgesehen, so ist es von Vorteil, wenn die Einschnitte von Profilrippe zu Profilrippe in die gleiche Umfangsrichtung versetzt angeordnet sind. Dieser stufenweise Versatz ist besonders günstig für eine Reduktion der Verformbarkeit des Laufstreifens und damit für eine Reduktion des Rollwiderstandes.

Für den Laufstreifen stabilisierend und damit ebenfalls vorteilhaft für den Rollwiderstand ist es, wenn gemäß der Erfindung die Einschnitte unter einem Winkel von 10° bis 30° zur axialen Richtung des Laufstreifens verlaufen. Eine weitere, günstige Stabilisierung wird mit Einschnitten erzielt, welche in Draufsicht einen Zick-Zack- oder wellenförmigen Verlauf aufweisen oder welche dreidimensional strukturierte Einschnittwände besitzen. Die Einschnitte in erfindungsgemäß ausgeführten Fahrzeugluftreifen können jedoch auch gerade verlaufen. Sämtliche Einschnitte in den mittleren Profilrippen sollten vorteilhafterweise übereinstimmende Erstreckungsrichtungen aufweisen.

Die die mittleren Profilrippen voneinander trennenden Umfangsrillen können bei erfindungsgemäß ausgeführtem Laufstreifen unstrukturierte Rillenflanken und einen U-förmigen Querschnitt aufweisen. Diese Ausführung der relativ schmalen Umfangsrillen ist für das Wasserableitvermögen von Vorteil.

In diesem Zusammenhang ist es auch günstig, wenn die die mittleren Profilrippen voneinander trennenden Umfangsrillen eine Tiefe aufweisen, die mindestens 60 % der maximalen Profiltiefe - dies entspricht der größten Tiefe der breiten Umfangsrillen zwischen den schulterseitigen Profilrippen und der diesen jeweils benachbarten Profilrippe - entspricht.

Stabilisierend auf die mittleren Profilrippen wirkt es ferner, wenn die Einschnitte an Rillenflankenstellen in die zwischen einer mittleren Profilrippe und einer schulterseitigen Profilrippe verlaufende Umfangsrille einmünden, welche unter einem Winkel von 0° bis 5° zur radialen Richtung verlaufen.

Weitere Merkmale, Vorteile und Einzelheiten der Erfindung werden nun anhand der Zeichnung, die schematisch ein Ausführungsbeispiel darstellt, näher beschrieben. Dabei zeigen
Fig. 1 eine Draufsicht auf einen Abschnitt einer Abwicklung einer Ausführungsform eines Laufstreifens eines Fahrzeugluftreifens,
Fig. 2 einen Schnitt entlang der Linie II-II der Fig. 1 und
Fig. 3 eine Schrägansicht eines Umfangsabschnittes mit einer breiten Umfangsrille.

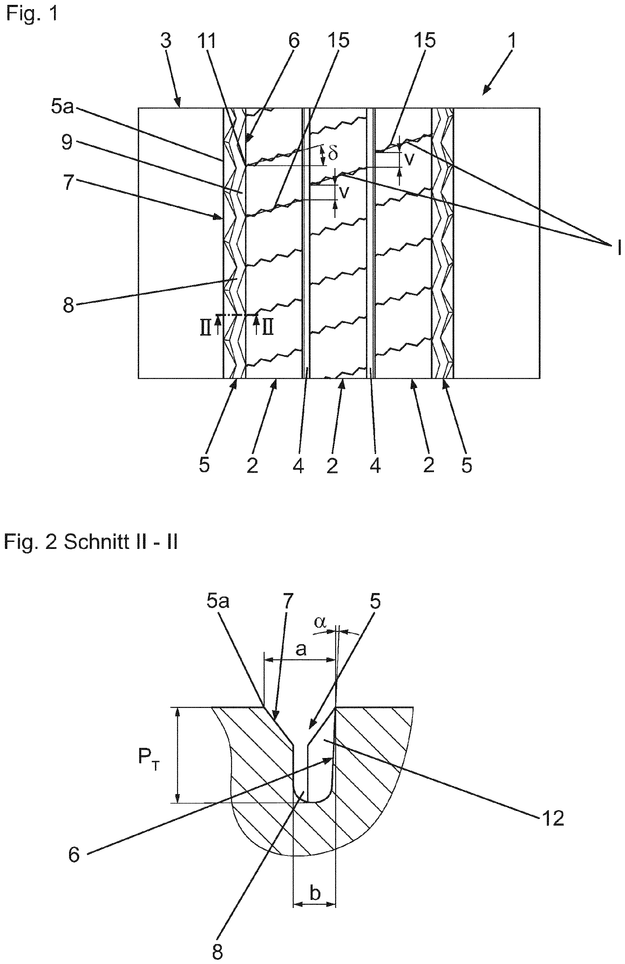

Die Erfindung befasst sich mit einer speziellen Ausgestaltung und Anordnung von Einschnitten in Profilrippen in Laufstreifen von Nutzfahrzeugreifen, insbesondere für die Antriebsachse von Lastkraftwagen bzw. Schwerlastfahrzeugen. Fig. 1 zeigt eine Draufsicht auf einen Umfangsabschnitt einer erfindungsgemäßen Ausführungsform eines Laufstreifens 1 mit drei im mittleren Bereich des Laufstreifens in Umfangsrichtung verlaufenden Profilrippen 2 und je einer schulterseitig verlaufenden Profilrippe 3. Die mittlere der drei Profilrippen 2 umläuft den Reifen entlang des Reifenäquators und ist von den beiden benachbarten Profilrippen 2 durch je eine in Umfangsrichtung vorzugsweise gerade umlaufende Umfangsrille 4 getrennt. Die Umfangsrillen 4 sind an der Laufstreifenperipherie im Neuzustand des Reifens insbesondere zwischen 3 mm und 4 mm breit, weisen einen im Wesentlichen U-förmigen Querschnitt, welcher nicht gezeigt ist, auf und reichen vorzugsweise bis auf die im Laufstreifen maximal vorgesehene Profiltiefe, welche bei erfindungsgemäß ausgeführten Reifen zwischen 12 mm und 30 mm beträgt. Jede äußere Profilrippe 2 ist durch eine weitere Umfangsrille 5 von je einer der beiden schulterseitigen Profilrippen 3 getrennt. Die Profilrippen 3 können, wie es Fig. 1 zeigt, unstrukturiert bzw. weitgehend unstrukturiert ausgeführt sein oder mit Einschnitten und Rillen versehen sein. Anstelle von drei mittleren Profilrippen 2 können zwei oder mehr als drei mittlere Profilrippen, insbesondere vier, vorgesehen sein.

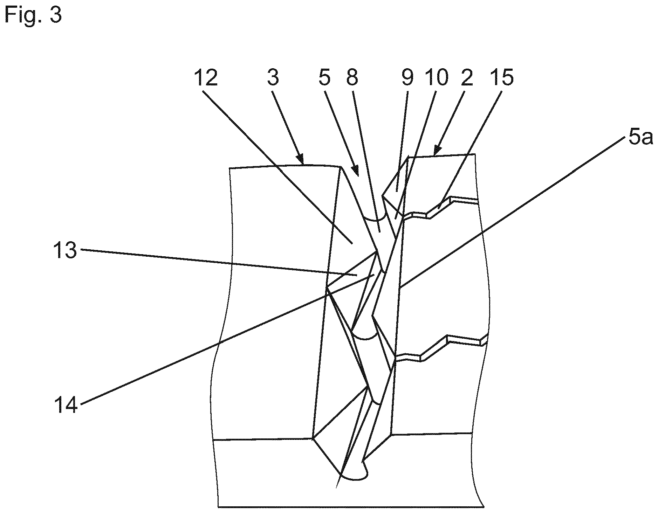

Die Umfangsrillen 5 weisen im Neuzustand des Reifens an der Laufstreifenperipherie eine Breite a von 7 mm bis 20 mm auf, ihre Tiefe entspricht der maximal vorgesehenen Profiltiefe P_{T}, die in der Schnittdarstellung der Fig. 2 eingezeichnet ist. Die Breite a der Umfangsrillen 5 entspricht dem gegenseitigen Abstand von gerade und parallel zueinander in Umfangsrichtung umlaufenden Randkanten 5a der Umfangsrillen 5. Die Umfangsrillen 5 sind jeweils durch zwei einander gegenüberliegende Rillenflanken 6, 7 begrenzt, die unterschiedlich strukturiert sind. Am Grund der Umfangsrillen 5 verläuft in Zick-Zack-Form und mit im Wesentlichen gleich langen Zick-Zack-Abschnitten eine Grundnut 8, deren Breite b zwischen 30 % und 50 % der Breite a beträgt. Die Zick-Zack-Wellenlänge der Grundnut 8, welche durch die Länge ihrer Abschnitte bestimmt ist, beträgt zwischen 30 mm und 80 mm. Die Grundnut 8 entsteht durch eine spezielle Ausgestaltung der Rillenflanken 6, 7, wobei diese Ausgestaltung nicht Gegenstand der Erfindung ist und nachfolgend nur kurz anhand der Fig. 3 erläutert wird.

Die Rippenflanke 6 wird von dreieckförmigen Flankenflächen 9, 10 gebildet, wobei die im Wesentlichen als gleichseitige Dreiecke ausgeführte Flankenflächen 9 an der Randkante 5a ansetzen und Richtung Grundnut 8 jeweils in zwei weitere dreieckige Flankenflächen 10 übergehen. Zwei benachbarte Flankenflächen 10 besitzen von der Randkante 5a Richtung Grundnut 8 verlaufende gemeinsame Eckkanten 11, welche, wie es die Schnittdarstellung in Fig. 2 zeigt, entweder in radialer Richtung verlaufen oder unter einem kleinen spitzen Winkel α zur radialen Richtung verlaufen. Der Winkel α beträgt bis zu 5°. Die Rippenflanke 7 setzt sich ebenfalls aus dreieckigen Flankenflächen 12, 13, 14 zusammen, deren Anordnung Fig. 3 zu entnehmen ist.

In den mittleren Profilrippen 2 sind Einschnitte 15 ausgebildet, die bei der gezeigten Ausführungsform in Draufsicht einen Zick-Zack-förmigen Verlauf aufweisen, innerhalb der Profilrippen 2 parallel bzw. im Wesentlichen parallel zueinander verlaufen und in die die Profilrippen 2 begrenzenden Umfangsrillen 4, 5 münden. Die in den beiden äußeren Profilrippen 2 verlaufenden Einschnitte 15 münden an den Eckkanten 14 in die Umfangsrillen 5. Vorzugsweise weisen die Einschnitte 15 in sämtlichen Profilrippen 2 übereinstimmende Erstreckungsrichtungen auf, welche in Fig. 1 durch gerade Linien l angedeutet sind. Die Linien l schließen mit der axialen Richtung Winkel δ ein, welche zwischen 5° und 15° gewählt sind. Die gegenseitigen Abstände der Einschnitte 15 in jeder äußeren Profilrippe 2 entsprechen den gegenseitigen Abständen der in Umfangsrichtung benachbarten Eckkanten 12, die gegenseitigen Abstände der Einschnitte 15 in der mittleren Profilrippe sind entsprechend angepasst, wobei die Einschnitte 15 von Profilrippe 2 zu Profilrippe 2 in Umfangsrichtung um einen Abstand v gegeneinander versetzt sind, welcher zwischen 5 mm und 7 mm beträgt. Vorzugsweise sind die Einschnitte 15 in sämtlichen Profilrippen 2 in der gleichen Umfangsrichtung gegeneinander versetzt. Durch die Abstände v ergibt sich ferner ein entsprechender Umfangsversatz der beiden Umfangsrillen 5.

Die Einschnitte 15 weisen eine konstante Breite auf, welche zwischen 0,8 mm und 2 mm gewählt wird, ihre Tiefe beträgt mindestens 60 % der maximalen Profiltiefe P_{T}.

Die breiten, zwischen den mittleren und den schulterseitigen Profilrippen 2, 3 verlaufenden Umfangsrillen 5 können beliebig strukturierte Rillenflanken 6, 7 oder auch unstrukturierte Rillenflanken und einen U-förmigen Querschnitt aufweisen. Die Ausgestaltung der Rillenflanken 6 bei den mittleren Profilrippen 2 sollte jedoch derart sein, dass die Einschnitte 15 an Flankenstellen münden, die unter einem Winkel von 0° bis 5° zur radialen Richtung verlaufen.

Die Einschnitte 15 können auch als gerade verlaufende Einschnitte ausgeführt sein. Sie können von beliebig strukturierten Wänden begrenzt sein, um stabilisierende Abstützungseffekte zu ermöglichen.

Mit erfindungsgemäß ausgeführten Laufstreifen ausgestattete Reifen weisen einen geringeren Rollwiderstand auf als Reifen mit herkömmlich ausgeführten Laufstreifen, wobei andere wichtige Laufstreifeneigenschaften, wie Nassgriff, die Traktions- und Bremseigenschaften und die Lebensdauer, auf hohem bzw. gutem Niveau erhalten bleiben.

### Bezugszeichenliste

- 1: ....................... Laufstreifen
- 2: ....................... Profilrippe
- 3: ....................... schulterseitige Profilrippe
- 4: ....................... Umfangsrille
- 5: ....................... Umfangsrille
- 5a: ..................... Randkante
- 6: ....................... Rillenflanke
- 7: ....................... Rillenflanke
- 8: ....................... Grundnut
- 9: ....................... Flankenfläche
- 10: ....................... Flankenfläche
- 11: ....................... Eckkante
- 12: ....................... Flankenfläche
- 13: ....................... Flankenfläche
- 14: ....................... Flankenfläche
- 15: ....................... Einschnitt
- a: ....................... Breite
- b: ....................... Breite
- l: ........................ Linie
- v: ....................... Abstand
- α: ....................... Winkel
- δ: ....................... Winkel

## Patentansprüche

1. Fahrzeugluftreifen für Nutzfahrzeuge mit einem Laufstreifen (1) mit einer Anzahl von in Umfangsrichtung umlaufenden Umfangsrillen (4, 5), welche den Laufstreifen (1) in zumindest zwei mittlere Profilrippen (2) und zwei schulterseitige Profilrippen (3) gliedern, wobei in den mittleren Profilrippen (2) jeweils eine Anzahl von in jeder Profilrippe (2) parallel verlaufenden und sich im Wesentlichen in axialer Richtung erstreckenden, in die Umfangsrillen (4, 5) mündenden Einschnitten (15) angeordnet ist,
**dadurch gekennzeichnet,**
**dass** die Einschnitte (15) in den mittleren Profilrippen (2) von Profilrippe (2) zu Profilrippe (2) jeweils um einen Abstand (v) von 5 mm bis 7 mm in Umfangsrichtung gegeneinander versetzt sind, und dass die die mittleren Profilrippen (2) voneinander trennende(n) Umfangsrille(n) (4) im Wesentlichen gerade verläuft bzw. verlaufen und an der Laufstreifenperipherie im Neuzustand des Reifens eine Breite zwischen 3 mm und 4 mm aufweist bzw. aufweisen.

2. Fahrzeugluftreifen nach Anspruch 1 mit mindestens drei mittleren Profilrippen (2), **dadurch gekennzeichnet, dass** die Einschnitte (15) von Profilrippe (2) zu Profilrippe (2) in die gleiche Umfangsrichtung versetzt sind.

3. Fahrzeugluftreifen nach Anspruch 1 oder 2, **dadurch gekennzeichnet, dass** sich die Einschnitte (15) unter einem Winkel (δ) von 10° bis 30° zur axialen Richtung des Laufstreifens (1) erstrecken.

4. Fahrzeugluftreifen nach einem der Ansprüche 1 bis 3, **dadurch gekennzeichnet, dass** sämtliche Einschnitte (15) übereinstimmende Erstreckungsrichtungen aufweisen.

5. Fahrzeugluftreifen nach einem der Ansprüche 1 bis 4, **dadurch gekennzeichnet, dass** die die mittleren Profilrippen (2) voneinander trennenden Umfangsrillen (4) unstrukturierte Rillenflanken und einen U-förmigen Querschnitt aufweisen.

6. Fahrzeugluftreifen nach einem der Ansprüche 1 bis 5, **dadurch gekennzeichnet, dass** die die mittleren Profilrippen (2) voneinander trennenden Umfangsrillen (4) eine Tiefe ausweisen, die mindestens 60% der maximalen Profiltiefe entspricht.

7. Fahrzeugluftreifen nach einem der Ansprüche 1 bis 6, **dadurch gekennzeichnet, dass** die in die zwischen einer mittleren Profilrippe (2) und einer schulterseitigen Profilrippe (3) verlaufende Umfangsrille (5) einmündenden Einschnitte (15) jeweils an Rillenflankenstellen einmünden, die unter einem Winkel (α) von 0° bis 5° zur radialen Richtung verlaufen.

## Claims

1. Pneumatic vehicle tyre for commercial vehicles with a tread rubber (1) comprising a number of circumferential channels (4, 5), which run around in the circumferential direction and divide the tread rubber (1) into at least two central profile ribs (2) and two shoulder-side profile ribs (3), a number of sipes (15) being arranged in each of the central profile ribs (2), the sipes running parallel and extending substantially in the axial direction in each profile rib (2) and entering into the circumferential channels (4, 5),
**characterized**
**in that** the sipes (15) in the central profile ribs (2) are respectively offset in the circumferential direction with respect to one another from profile rib (2) to profile rib (2) by a distance (v) of 5 mm to 7 mm, and in that the circumferential channel(s) (4) that separate the central profile ribs (2) from one another runs or run substantially in a straight line and has or have a width of between 3 mm and 4 mm at the periphery of the tread rubber when the tyre is new.

2. Pneumatic vehicle tyre according to Claim 1 comprising at least three central profile ribs (2), **characterized in that** the sipes (15) are offset in the same circumferential direction from profile rib (2) to profile rib (2).

3. Pneumatic vehicle tyre according to Claim 1 or 2, **characterized in that** the sipes (15) extend at an angle (δ) of 10° to 30° in relation to the axial direction of the tread rubber (1).

4. Pneumatic vehicle tyre according to one of Claims 1 to 3, **characterized in that** all of the sipes (15) have coinciding directions of extent.

5. Pneumatic vehicle tyre according to one of Claims 1 to 4, **characterized in that** the circumferential channels (4) that separate the central profile ribs (2) from one another have unstructured channel flanks and a U-shaped cross section.

6. Pneumatic vehicle tyre according to one of Claims 1 to 5, **characterized in that** the circumferential channels (4) that separate the central profile ribs (2) from one another have a depth that corresponds to at least 60% of the maximum profile depth.

7. Pneumatic vehicle tyre according to one of Claims 1 to 6, **characterized in that** the sipes (15) that enter the circumferential groove (5) running between a central profile rib (2) and a shoulder-side profile rib (3) enter in each case at locations of the channel flanks that run at an angle (α) of 0° to 5° in relation to the radial direction.

## Revendications

1. Pneumatique de véhicule pour des véhicules utilitaires, avec une bande de roulement (1) comportant plusieurs sillons périphériques (4, 5) s'étendant en direction périphérique, qui divisent la bande de roulement (1) en au moins deux nervures profilées centrales (2) et deux nervures profilées d'épaulement (3), dans lequel un certain nombre d'encoches (15) courant parallèlement dans chaque nervure profilée (2) et s'étendant essentiellement en direction axiale et débouchant dans les sillons périphériques (4, 5) sont disposées respectivement dans les nervures profilées centrales (2), **caractérisé en ce que** les encoches (15) dans les nervures profilées centrales (2) sont chaque fois décalées l'une par rapport à l'autre dans la direction périphérique d'une distance (v) de 5 mm à 7 mm d'une nervure profilée (2) à l'autre nervure profilée (2), et **en ce que** le/les sillon(s) périphérique(s) (4) séparant l'une de l'autre les nervures profilées centrales (2) est/sont essentiellement rectilignes et présente(nt) à la périphérie de la bande de roulement, dans l'état neuf du pneumatique, une largeur comprise entre 3 mm et 4 mm.

2. Pneumatique de véhicule selon la revendication 1, avec au moins trois nervures profilées centrales (2), **caractérisé en ce que** les encoches (15) sont décalées dans la même direction périphérique d'une nervure profilée (2) à l'autre nervure profilée (2).

3. Pneumatique de véhicule selon la revendication 1 ou 2, **caractérisée en ce que** les encoches (15) s'étendent sous un angle (δ) de 10° à 30° par rapport à la direction axiale de la bande de roulement (1).

4. Pneumatique de véhicule selon l'une quelconque des revendications 1 à 3, **caractérisée en ce que** toutes les encoches (15) présentent des directions d'extension correspondantes.

5. Pneumatique de véhicule selon l'une quelconque des revendications 1 à 4, **caractérisé en ce que** les sillons périphériques (4) séparant l'une de l'autre les nervures profilées centrales (2) présentent des flancs de sillon non structurés et une section transversale en forme d'U.

6. Pneumatique de véhicule selon l'une quelconque des revendications 1 à 5, **caractérisé en ce que** les sillons périphériques (4) séparant l'une de l'autre les nervures profilées centrales (2) présentent une profondeur, qui correspond à au moins 60 % de la profondeur de profil maximale.

7. Pneumatique de véhicule selon l'une quelconque des revendications 1 à 6, **caractérisé en ce que** les encoches (15) débouchant dans le sillon périphérique (5) courant entre une nervure profilée centrale (2) et une nervure profilée d'épaulement (3) débouchent respectivement à des endroits du flanc de sillon, qui s'étendent sous un angle (α) de 0° à 5° par rapport à la direction radiale.
